# EUROPEAN PATENT APPLICATION

(11) **EP 1 406 441 A1**
(43) Date of publication of application: **07.04.2004**
(21) Application number: 03743026.1
(22) Date of filing: 26.02.2003
(51) Int. Cl.: H04N 7/08, H04N 7/24

(54) **IMAGE TRANSMISSION APPARATUS AND IMAGE TRANSMISSION METHOD**

(30) Priority: 28.02.2002 JP 2002052805
(71) Applicant: MATSUSHITA ELECTRIC INDUSTRIAL CO., LTD., Kadoma-shi, Osaka 571-8501 (JP)
(72) Inventor: OKAWA, Masato, Toyama-shi, Toyama 931-8314 (JP); ITO, Hiroyuki, Kawasaki-shi, Kanagawa 214-0032 (JP)
(74) Representative: Grünecker, Kinkeldey, Stockmair & Schwanhäusser Anwaltssozietät
(86) International application number: PCT/JP2003/002100
(87) International publication number: WO 2003/073759

(57) **Abstract**

Coding sections (100-1, 100-2) code different images at the same time. An identification information generating section (103) generates identification data to be added to coded data in order to identify whether coded data is coded data that is based on image data of a first CH or coded data that is based on image data of a second CH. Identification information adding sections (105-1, 105-2) add this identification information to coded data. Coded data to which identification information is added is stored in a transmission buffer memory (102) having a ring buffer structure. This allocates a different bit rate to coded data of the image data of multiple channels, enabling to perform transmission by one channel and improve transmission efficiency.

## Description

### Technical Field

The present invention relates to an image transmitting apparatus and image transmitting method.

### Background Art

Conventionally, as an apparatus that compresses and codes image data and an apparatus that transmits compressed and coded image data, there are proposed an image coding apparatus and an apparatus for transmitting the coded data using an algorithm for coding moving images that is recommended by the International Standards Organization (ISO), the International Eelectrotechnical Commission (IEC), and the International Telecommunications Union-Telecommunications Standards Section (ITU-T).

Then, in the current state that an image coding and transmitting technique is attracting much attention, attention is given to the apparatus, which processes image signals of multichannel such as TV telephone, moving images distribution and transmits these signals simultaneously, namely, an apparatus that performs transmission by one channel, and this is expected to be used in various services and the range of application is wide.

Unexamined Japanese Patent Publication 7-284103 is described as one of image transmitting apparatuses for multichannel. According to this apparatus, a quantization parameter is adjusted to enable to transmit coded data of multichannel efficiently without degrading image quality.

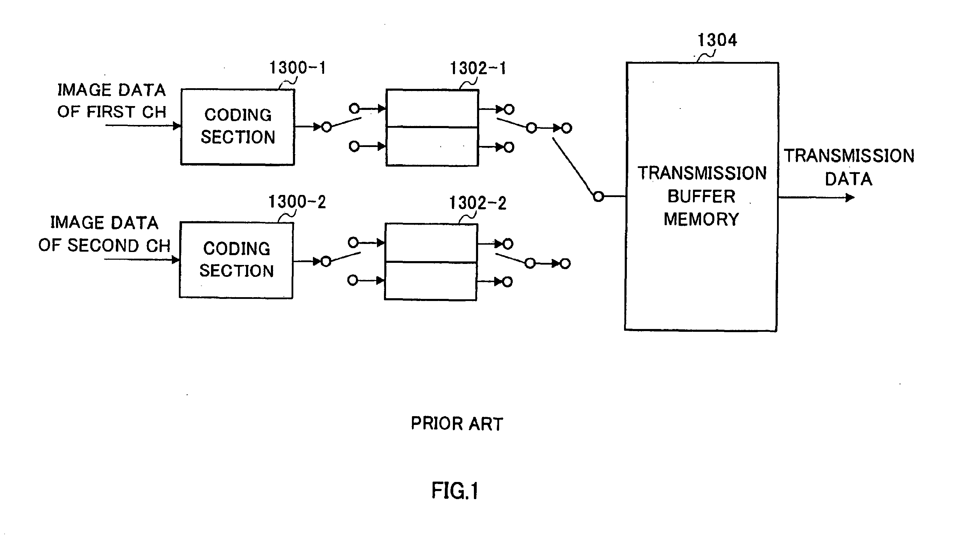

FIG. 1 is a block diagram illustrating an example of a configuration of a conventional image transmitting apparatus. Herein, the following will explain, for example, a case in which image data of two types is coded and transmitted.

First image data is input to a coding section 1300-1 and coded, and thereafter written to one bank of an intermediate buffer 1302-1 having two-face (two-bank) structure. At this time, coded data, which is already written, is read from the other bank, and written to a transmission buffer memory 1304. When one bank of the intermediate buffer 1302-1 becomes full due to writing of coded data, an output of a coding section 1300-2 is switched to the other, and in synchronization with this, reading from the intermediate buffer 1302-1 is switched.

Second image data is processed in basically the same manner as the first image data via the coding section 1300-2 and the intermediate buffer 1302-1. However, since the number of inputs of a transmission buffer memory 1304 is one, writing of the first coded data and writing of the second coded data are actually carried out in a time division manner.

However, the image transmitting apparatus illustrated in FIG. 1 is provided with intermediate buffers 1302-1 and 1302-2, it is possible to code first image data and second image data simultaneously.

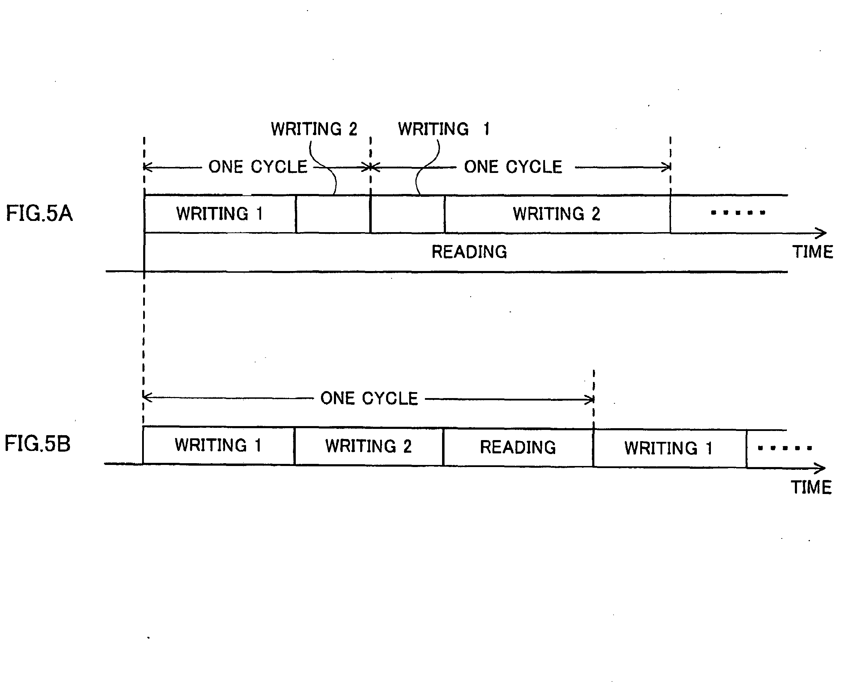

By the aforementioned processing, coded data of two types is stored to the transmission buffer memory 1304 and can be transmitted by one channel. However, since the transmission buffer memory 1304 cannot perform writing and reading simultaneously, reading is carried out when writing (writing 1) of first coded data and writing (writing 2) of second coded data end as illustrated in FIG. 5B.

In the conventional image transmitting apparatus, since multiple coded data is mixed in a single transmission buffer memory, the size of each coded data (code quantity) is uniformly prepared such that a transmission data receiving side can separate the respective data.

However, the code quantity of other data is adjusted by controlling the quantization parameter such that the code quantity conforms to a certain quantity of coded data. However, depending on the case, there is a problem in which information (codes) must be redundantly allocated since the code quantity is not satisfied.

Additionally, in such a case, since the code quantity, which is made to flow into the buffer from each coding section by one writing operation, must be fixed, coded data output from each coding section is limited to the same bit rate.

Moreover, since the transmission buffer memory cannot execute writing and reading simultaneously, there is a problem in which idle time occurs in transmitting coded data to further reduce transmission efficiency.

Furthermore, since the transmission buffer memory cannot execute writing and reading simultaneously, idle time occurs when coded data is read from an intermediate buffer to write to the transmission buffer memory, and a buffer memory having a two-face (two-bank) structure is needed for each channel in order to absorb the idle time and start writing immediately after when writing is made possible, causing a problem in which a hardware configuration becomes complicated.

### Disclosure of Invention

An object of the present invention is to provide an image transmitting apparatus and image transmitting method that enable to transmit coded data of image data of multiple channels via one channel with different bit rates allocated thereto, thereby improving transmission efficiency.

The subject of the present invention is that identification information of a channel through which image data is transmitted is added to coded image data to allocate a different bit rate to image data of multiple channels and store image data with identification information of this channel added to a buffer that can execute each of storage and output with independent timing.

### Brief Description of Drawings

FIG. 1 is a block diagram illustrating one example of a configuration of a conventional image transmitting apparatus;
FIG. 2 is a block diagram illustrating one example of a configuration of an image transmitting apparatus according to Embodiment 1 of the present invention;
FIG. 3A is a view illustrating a ring buffer structure;
FIG. 3B is a view illustrating a data structure of coded data according to Embodiment 1 of the present invention;
FIG. 3C is a view illustrating a data structure of a transmission buffer memory according to Embodiment 1 of the present invention;
FIG. 3D is a view illustrating a data structure of first coded data after separation;
FIG. 3E is a view illustrating a data structure of first coded data after separation;
FIG. 4 is a flowchart illustrating the steps of an image transmitting method according to Embodiment 1 of the present invention;
FIG. 5A is a view illustrating the processing contents of the transmission buffer memory in Embodiment 1 of the present invention;
FIG. 5B is a view illustrating the processing contents of the transmission buffer memory in a conventional image transmitting apparatus;
FIG. 6 is a block diagram illustrating one example of a configuration of an image transmitting apparatus according to Embodiment 2 of the present invention;
FIG. 7 is a block diagram explaining a time division operation in Embodiment 2 of the present invention;
FIG. 8 is a flowchart illustrating the steps of an image transmitting method according to Embodiment 2 of the present invention;
FIG. 9 is a block diagram illustrating one example of a configuration of an image transmitting apparatus according to Embodiment 3 of the present invention;
FIG. 10A is a view illustrating a transition of a residual data size of a transmission buffer memory in Embodiment 3 of the present invention;
FIG. 10B is a view illustrating a transition of a quantization parameter value in Embodiment 3 of the present invention;
FIG.11 is a flowchart illustrating the steps of an image transmitting method according to Embodiment 3 of the present invention;
FIG. 12 is a block diagram illustrating one example of a configuration of an image transmitting apparatus according to Embodiment 4 of the present invention;
FIG. 13 is a view explaining control of frame skip according to Embodiment 4; and
FIG. 14 is a flowchart illustrating the steps of an image transmitting method according to Embodiment 4 of the present invention.

### Best Mode for Carrying Out the Invention

Embodiments of the present invention will be specifically explained with reference to the drawings.

### (Embodiment 1)

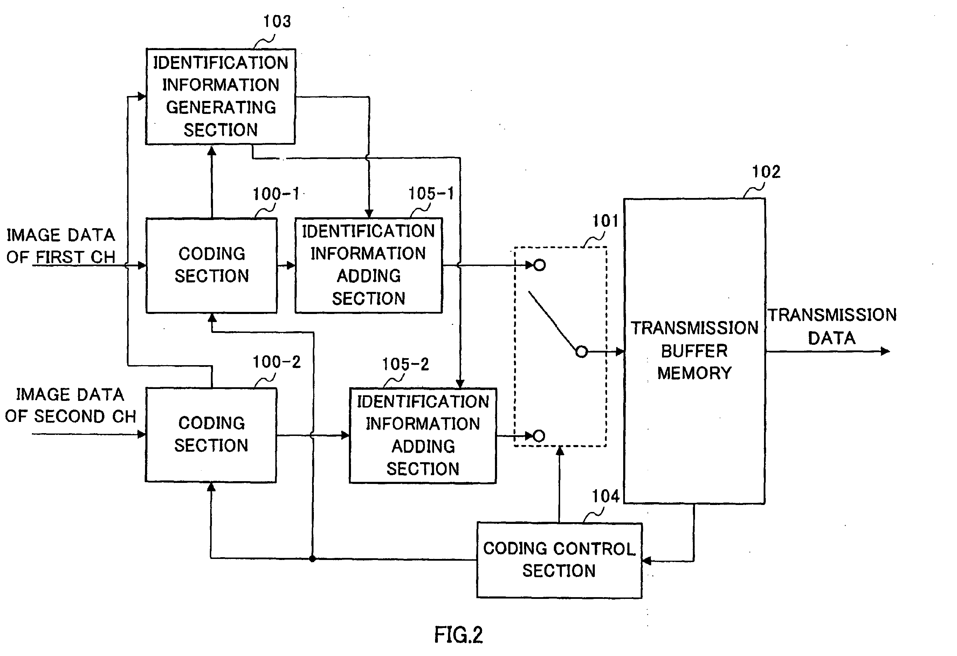

FIG. 2 is a block diagram illustrating one example of a configuration of an image transmitting apparatus according to Embodiment 1 of the present invention. Herein, for example, a case is explained where image data of two types corresponding to two channels by use of coding systems of moving images such as H.261, H. 263, MPEG-1, MPEG-2, MPEG-4 based on recommendations of ITU-T or ISO.

In this figure, a coding section 100-1 executes compression/coding (hereinafter referred to as first coding) of image data of a first channel (hereinafter abbreviated as CH as necessary). A coding section 100-2 executes compression/coding (hereinafter referred to as second coding) of image data of a second CH.

A transmission buffer memory 102 is a memory having a ring buffer structure to be described later, and is a buffer memory that temporarily stores coded data generated by the coding sections 100-1 and 100-2.

An identification information generating section 103 generates identification information that is added to coded data in order to perform identification between coded data stored in the transmission buffer memory 102. Identification information adding sections 105-1 and 105-2 add this identification information to coded data.

A coding control section 104 controls timing of first coding and timing of second coding. Also, the coding control 104 controls switching of a selector 101 according to these codings.

Herein, the ring buffer structure will be explained as follows:

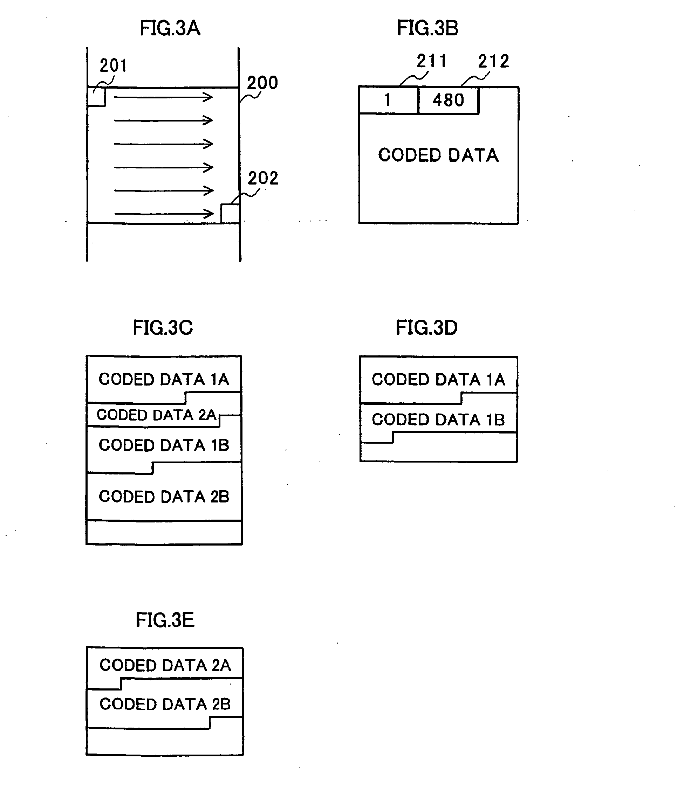

The ring buffer structure is one that has such a data structure 200 in which when a read pointer or a write pointer is positioned at an address 202 as illustrated in FIG. 3A and the address is incremented by one, the pointer moves to an address 201, and namely, this is a data structure that is installed in view of hardware or and software.

A more detailed explanation will be given as follows. Namely, the ring buffer structure is a data structure that manages four variables of a location to be next read (R) , a location to be next written (W), a size of buffer (S), and a quantity of written (unwritten) data (D).

R and W are index variables that gain access to a buffer main body, and that change 0 to S-1. When the value reaches S-1, R and W are normally incremented except returning to 0. When D=0, this indicates that the ring buffer is empty, and when D=S, this indicates that the ring buffer is full.

When reading from the ring buffer is executed, one byte is read from R, and R is incremented by one and D is decremented by one at the same time. When writing to the ring buffer is executed, one byte is written to the position of W and W is incremented by one and D is incremented by one at the same time.

An explanation will next be given of an operation of an image transmitting apparatus having the aforementioned configuration.

The coding sections 100-1 and 100-2 code different images at the same time, respectively. A buffer is provided to an input stage of each of the coding sections 100-1 and 100-2, and temporarily stores input image data while coding is not executed.

The identification information generating section 103 generates identification information to be added to coded data as illustrated in FIG. 3B in order to identify whether coded data is coded data that is based on image data of the first CH or coded data that is based on image data of the second CH.

In addition, identification information here includes two, that is, CH information 211 and data size information 212. Other information can be included in the information.

Identification information is added to coded data by the identification information adding sections 105-1 and 105-2 and is sequentially stored to the transmission buffer memory 102 having input/output terminals.

Since the transmission buffer memory 102 has the ring buffer structure, coded data can be taken from the output terminal with arbitrary timing. The read pointer is updated by an amount corresponding to the size of the coded data taken at this time.

When there is no stored data at all, namely, except when the write pointer and the read pointer are positioned at the same address, coded data can be taken with arbitrary timing.

Since the number of inputs of the transmission buffer memory 102 is one, the first and second coded data is alternately stored in a time division manner by a selector 101 and the write pointer of the memory is sequentially updated every time when data is stored.

It is assumed that first and second coded data, which are stored first, are coded data 1A and coded data 2A and that first and second coded data, which are stored later, are coded data 1B and coded data 2B. In the transmission buffer 102, the first coded data and second coded date are mixed in such a manner that their lengths are variable as illustrated in FIG. 3C.

The coding sections 100-1 and 100-2 perform such coding that coded data having more than a predetermined size is not output in order to prevent the overflow of the transmission buffer memory 102.

Since identification information is added to coded data taken from the transmission buffer memory 102, coded data of each CH can be easily separated from a data sequence where multiple different coded data is mixed as illustrated in FIGS. 3D and 3E, for example, in a CPU (Central Processing Unit) and a DSP (Digital Signal Processor) that are connected to an output terminal.

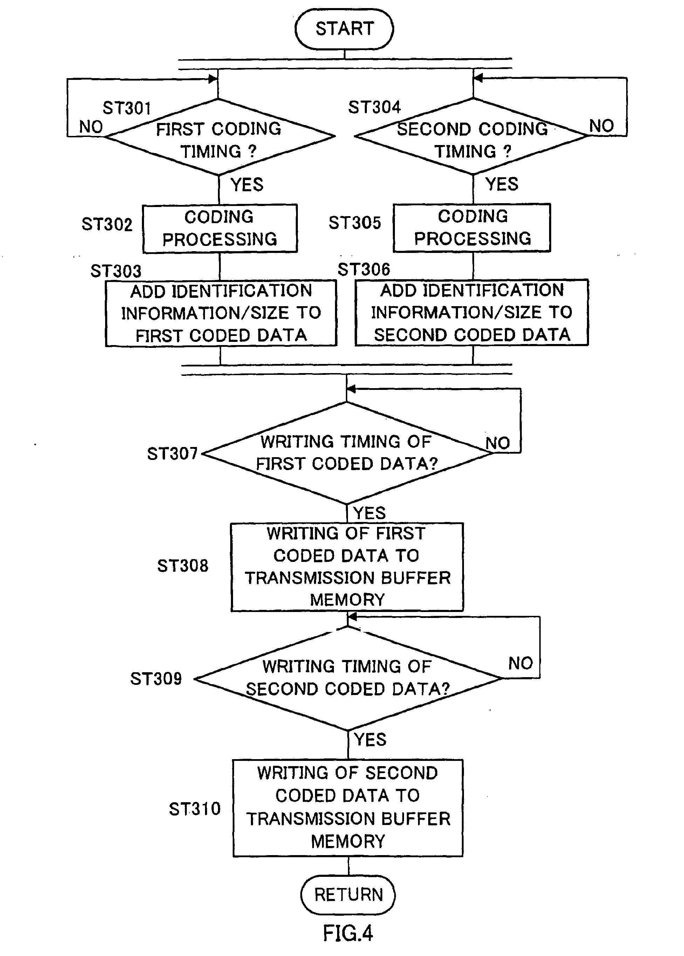

An explanation will next be given of an operation of an image transmitting apparatus having the aforementioned configuration with reference to the flowchart shown in FIG. 4.

The coding control section 104 determines whether timing is coding timing with which first coding is executed (ST301). When it is the first coding timing, the coding section 100-1 executes first coding processing (ST302) and adds identification information, indicative of first coding data, to coded data (ST303).

Similarly, the coding control section 104 determines whether timing is coding timing with which second coding is executed (ST304). When it is the second coding timing, the coding section 100-2 executes second coding processing (ST305) and adds identification information, indicative of second coding data, to coded data (ST306).

After identification information is added to the first and second coded data, it is determined whether timing is writing timing of the first coded data (ST307). When it is writing timing, coded data is written to the transmission buffer memory 102 (ST308). The write pointer of the transmission buffer memory 102 is updated by an amount corresponding to the size of coded data written at this time.

Next, it is determined whether timing is writing timing of the second coded data (ST309). When it is writing timing, coded data is written to the transmission buffer memory 102 (ST310). The write pointer of the transmission buffer memory 102 is updated by an amount corresponding to the size of coded data written at this time.

Since coded data can be taken with arbitrary timing except when there is no stored data at all, coded data is output from the transmission buffer memory 102 if it is timing with which coded data is output (read) from the transmission buffer memory 102. The read pointer is updated by an amount corresponding to the size of coded data output at this timing.

FIG. 5 is a view to compare the processing contents of the transmission buffer memory 102 with the conventional apparatus, FIG. 5A illustrates the case of the transmission buffer memory 102, and FIG. 5B illustrates the case of the conventional apparatus.

In the conventional apparatus, a reading step must be executed after passing through the steps of writing 1 and writing 2, while, in the transmission buffer memory 102, coded data can be read with arbitrary timing, so that no idle time occurs during the reading steps unlike the conventional apparatus. Accordingly, it is shown that transmission efficiency of coded data is improved.

Moreover, since time that is required for one cycle between the instant when the first coded data is started to be stored in the transmission buffer memory 102 and the instant when a next coded data is started to be stored is shorter than the case of the conventional apparatus, it is understood that an intermediate buffer, which is necessary to absorb time for waiting the storage processing in the pre-stage than the transmission memory 102, can be reduced or eliminated.

Moreover, the transmission buffer memory 102 can store coded data with a variable length, eliminating processing for adjusting the quantization parameter to increase the code quantity more than necessary in order to fix the code quantity in one storage step as in the conventional apparatus, so that time required for one storage step is shortened and resultantly the aforementioned two effects are further brought to the fore.

Moreover, no limitation is required in the code quantity that is generated by the coding sections 100-1 and 100-2, thereby eliminating the need for decreasing the code quantity less than the code quantity that seems to be originally necessary for ensuring the accuracy of image.

Thus, according to this embodiment, a different bit rate is allocated to coded data of the image data of multiple channels, enabling to perform transmission by one channel and improve transmission efficiency. Moreover, the relevant transmission can be implemented with a simple configuration.

Additionally, this embodiment explained the case in which an external apparatus separated coded data. However, it is possible to adopt a configuration in which a coded data separating apparatus is connected to the output terminal of the transmission buffer memory 102.

Furthermore, this embodiment explained the case, for example, in which the transmission buffer memory 102 had the ring buffer structure. However, any buffer may be possible if the buffer can alternately execute writing and reading with independent timing. For example, a memory in which data stored at a certain address is taken in order of storing time, namely, a memory having an FIFO (First-In First-Out) structure using a system in which data stored newest is taken last may be used.

### (Embodiment 2)

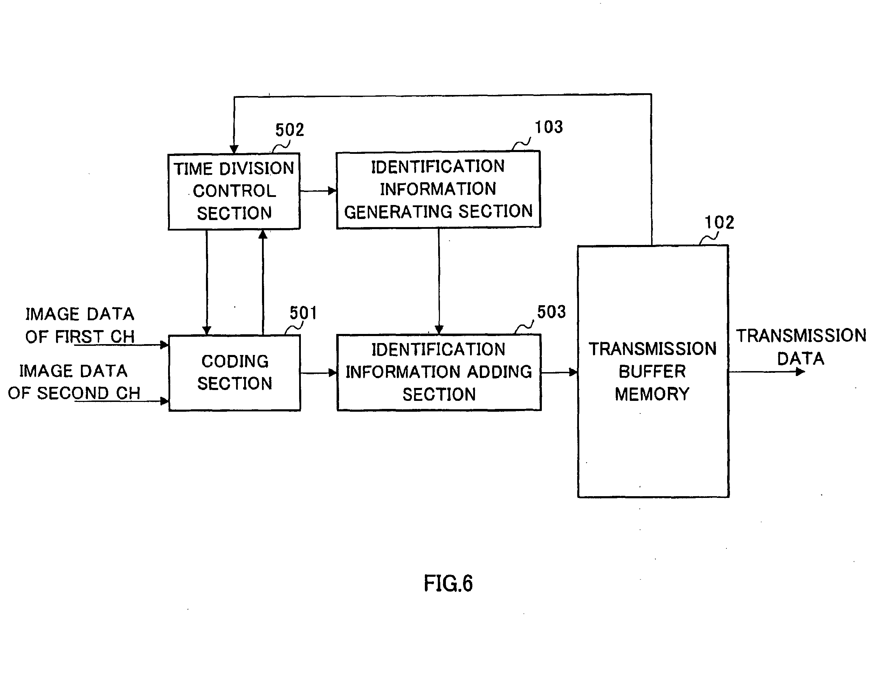

FIG. 6 is a block diagram illustrating one example of a configuration of an image transmitting apparatus according to Embodiment 2 of the present invention. Additionally, this image transmitting apparatus has the same basic configuration as that of the image transmitting apparatus illustrated in FIG. 2, and the parts with the same configuration as that of the apparatus of FIG. 2 are assigned the same numbers and their detailed explanations are omitted.

In this figure, image data of the first CH and the second CH is input to a coding section 501 and the first coding and the second coding are performed in a time division manner.

A time division control section 502 performs such control that the coding section 501 switches an object to be coded in a time division manner. The same buffer as that of each of the coding sections 100-1 and 100-2 in FIG. 2 is provided to the input stage of the coding section 501, thereby enabling to input image data of the first CH and the second CH at the same time and execute simultaneous coding apparently by only one coding section.

An explanation will next be given of an operation of the image transmitting apparatus having the aforementioned configuration.

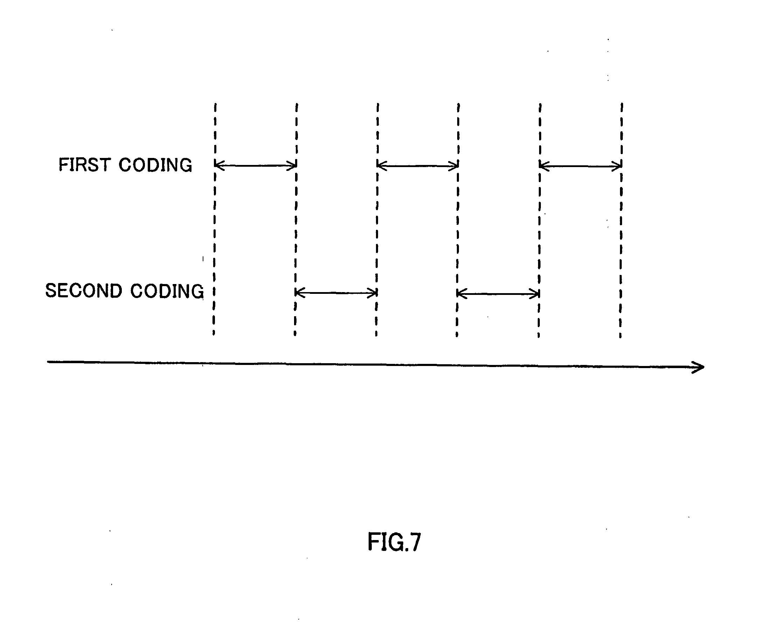

The single coding section 501 performs the first coding and second coding alternately by control of the time division control section 502 as illustrated in FIG. 7. When the same frame rate is used in the first coding and the second coding, codings may be alternately performed by time division control. Moreover, even when different frame rates are used, the time division control section 502 manages each frame rate and performs coding processing with a correct coding timing, thereby enabling to perform multiple codings at the exactly same time apparently as mentioned above.

Regarding a processing unit in which coding processing is switched by time division control, a picture unit, namely, a frame unit or an MB (Macro Block) unit may be used, and switching time may be set according to the configuration of the apparatus.

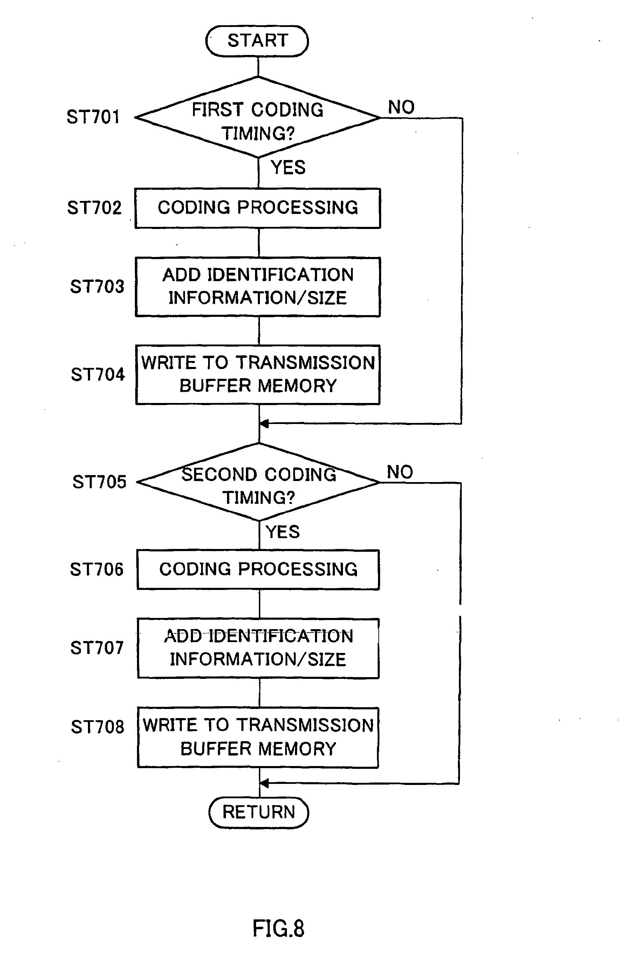

An explanation will next be given of an operation of the image transmitting apparatus having the aforementioned configuration with reference to the flowchart illustrated in FIG. 8.

The time division control section 502 determines whether timing is coding timing with which the first coding is executed based on the residual data size of the transmission buffer memory 102 in order to prevent the overflow of the transmission buffer memory 102 (ST701).

When it is coding timing with which the first coding is executed in step ST701, the coding section 501 performs the first coding processing (ST702). When this coding processing is completed, identification information, indicative of first coding data, is added to coded data (ST703) , similar to Embodiment 1. After identification information is added thereto, coding data is written to the transmission buffer memory 102 (ST704). The write pointer of the transmission buffer memory 102 is updated by an amount corresponding to the size of coded data written at this time.

Next, the time division control section 502 determines whether timing is coding timing with which the second coding is executed, similar to the above (ST705).

When it is coding timing with which the second coding is executed in step ST705, the coding section 501 performs the second coding processing (ST706). When this coding processing is completed, identification information, indicative of first coding data, is added to coded data (ST707). After identification information is added thereto, coding data is written to the transmission buffer memory 102 (ST708). The write pointer of the transmission buffer memory 102 is updated by an amount corresponding to the size of coded data written at this time. The transmission buffer memory 102 outputs coded data with arbitrary timing, similar to Embodiment 1. The read pointer is updated by an amount corresponding to the size of coded data output at this time.

Thus, according to this embodiment, coding processing is executed in a time division manner, thereby enabling to implement the same function as Embodiment 1 with a simpler configuration, namely, only one coding section.

### (Embodiment 3)

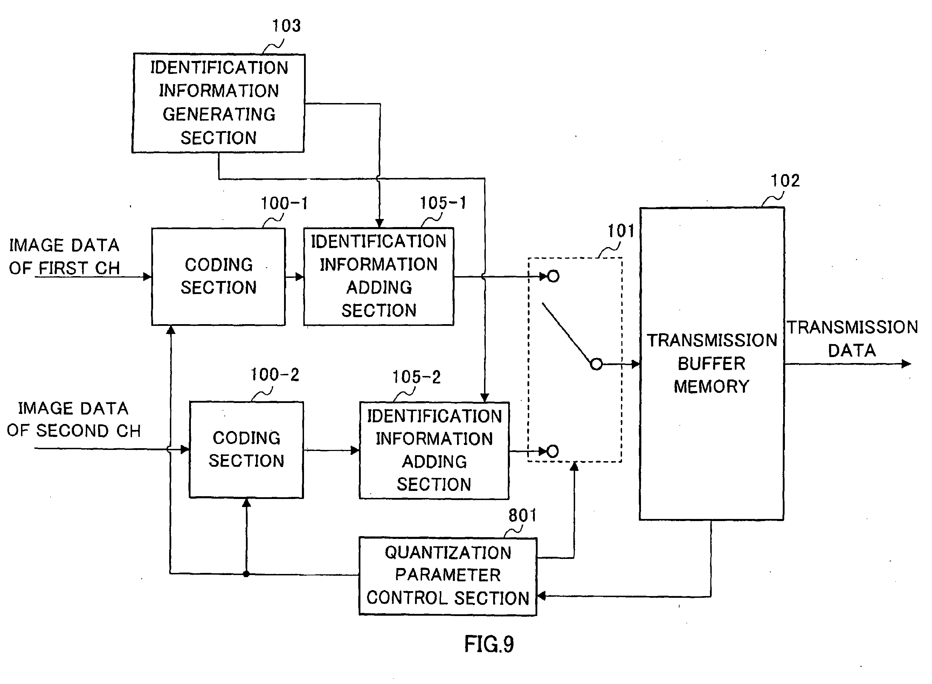

FIG. 9 is a block diagram illustrating one example of a configuration of an image transmitting apparatus according to Embodiment 3 of the present invention. Additionally, this image transmitting apparatus has the same basic configuration as that of the image transmitting apparatus illustrated in FIG. 2, and the parts with the same configuration as that of the apparatus of FIG. 2 are assigned the same numbers and their detailed explanations are omitted.

In this figure, a quantization parameter control section 801 controls a quantization parameter in the coding sections 100-1 and 100-2 based on the quantity of coded data left in the transmission buffer memory 102 such that a bit rate at which writing to the transmission buffer memory 102 from the coding sections 100-1 and 100-2 is executed reaches an optimal code quantity or a transmission rate of a line reaches an optimal code quantity.

Moreover, in accordance with control of the quantization parameter, timing of the first coding, timing of the second coding and switching of the selector 101 are also controlled.

An explanation will next be give of an operation of the image transmitting apparatus having the aforementioned configuration.

Since the data quantity after coding varies depending on whether target moving images indicate a lot of motion or not, the data quantity must be controlled to be suitable for the aforementioned bit rate and transmission rate of the line.

In this embodiment, it is assumed that the transmission buffer memory 102 is a buffer for adjusting the data quantity. Furthermore, a parameter control section 801 performs adjustment of the quantization parameter used in coding based on the quantity of residual coding data.

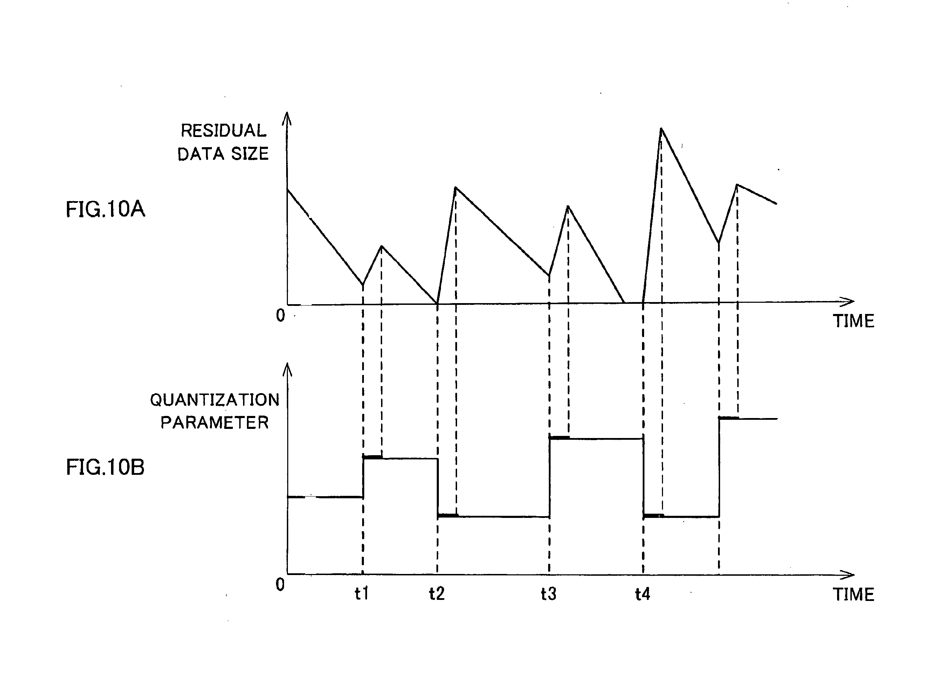

FIG. 10 is a view explaining how the quantization parameter is adjusted based on the residual data size of the transmission buffer memory 102. FIG. 10A illustrates a transition of a residual data size of the transmission buffer memory 102, and FIG. 10B illustrates a transition of a quantization parameter value. As illustrated in this figure, the residual data size of 'the transmission buffer memory 102 is measured at time t1, t2, t3, and t4, and the quantization parameter is decided based on the measured value.

When much coding data is left in the transmission buffer memory 102, the quantization parameter is increased to suppress a generating code quantity and prevent coding data from flowing into the transmission buffer memory 102. Conversely, when little coding data is left in the transmission buffer memory 102, the quantization parameter is decreased to control much coding data to flow into the transmission buffer memory 102. In FIG. 10, coding is intermittently executed (a thick line portion in FIG. 10).

The residual data size of the transmission buffer memory 102 is managed individually with respect to the first coding and the second coding and fed back to the coding sections 100-1 and 100-2 in order to adjust the quantization parameter.

Accordingly, rate control due to quantization parameter control can be individually performed independently of the first coding and the second coding. Moreover, the residual data quantity of the transmission buffer memory 102 may be managed collectively to perform quantization parameter control at the same time with the first coding and the second coding.

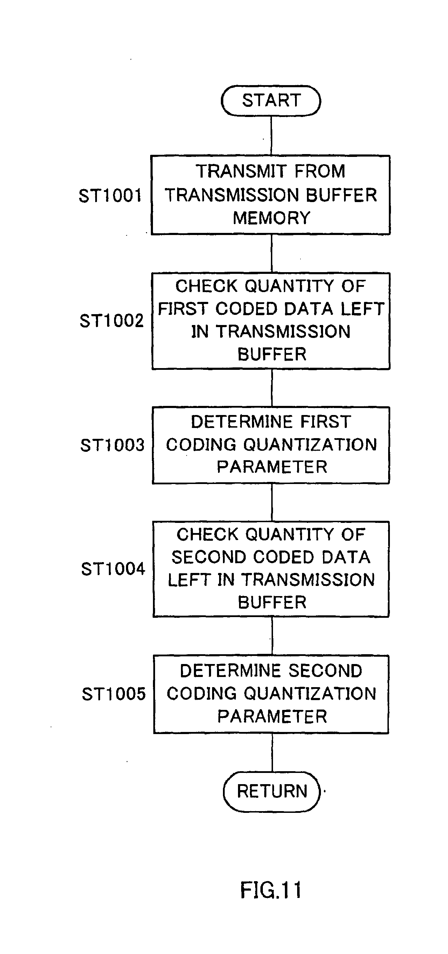

An explanation will next be given of an operation of an image transmitting apparatus having the aforementioned configuration with reference to the flowchart shown in FIG. 11. It is noted that the steps of writing of coded data to the transmission buffer memory 102 are omitted since they are the same as those of Embodiment 1.

When transmission of coded data from the transmission buffer memory 102 (ST1001) is completed , the quantization parameter control section 801 checks the data quantity of the first coding left in the transmission buffer memory 102 (ST1002). A quantization parameter used in a next first coding is decided by this value (ST1003). Then, the data quantity of the second coding is similarly checked (ST1004), and a quantization parameter used in a next second coding is decided (ST1005).

Thus, according to the above configuration, rate control due to quantization parameter control can be individually performed independently of the first coding and the second coding. Moreover, the residual data quantity of the transmission buffer memory 102 may be managed collectively to perform quantization parameter control at the same time with the first coding and the second coding.

Moreover, in Embodiment 1, it is possible to reduce or eliminate an intermediate buffer, which is necessary to absorb time for waiting the storage processing in the pre-stage than the transmission memory 102. However, in this embodiment, since the quantity of codes output from the coding sections 100-1 and 100-2 can be adjusted, there is a high possibility that no intermediate buffer will be provided even if image data input to the image transmitting apparatus according to this embodiment increases.

Furthermore, the fact that coded data stays in the transmission buffer memory 102 for a long time means that time between the instant when image data is input to the image transmitting apparatus of this embodiment and the instant when image data is actually transmitted increases and this will result in transmission delay. However, since the data quantity that stays in the transmission buffer memory 102 can be restrained by the aforementioned configuration, transmission delay can be suppressed.

Thus, according to this embodiment, the quantization parameter used in coding is adjusted based on the quantity of coded data left in the transmission buffer memory, enabling to always maintain the quantity of coded data stored in the transmission buffer memory in an optimal state and execute coding suitable for the transmission rate of the line. Accordingly, it is possible to reduce transmission delay and transmit coded data stably.

### (Embodiment 4)

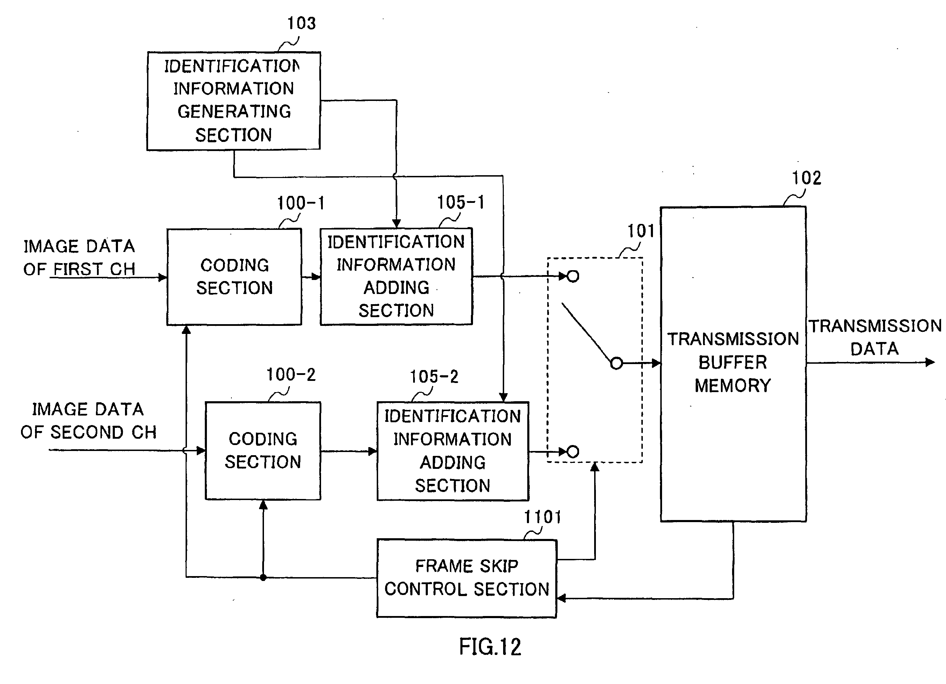

FIG. 12 is a block diagram illustrating one example of a configuration of an image transmitting apparatus according to Embodiment 4 of the present invention. Additionally, this image transmitting apparatus has the same basic configuration as that of the image transmitting apparatus illustrated in FIG. 2, and the parts with the same configuration as that of the apparatus of FIG. 2 are assigned the same numbers and their detailed explanations are omitted.

In this figure, a frame skip control section 1101 performs control of frame skip in such a way to obtain a code quantity suitable for the bit rate and the transmission rate based on the quantity of coded data left in the transmission buffer memory 102. Moreover, timing of the first coding, timing of the second coding and switching of the selector 101 are also controlled in accordance with control of frame skip.

An explanation will next be given of an operation of an image transmitting apparatus having the aforementioned configuration.

The feature of this apparatus is to perform control of skipping a coding frame when the data quantity cannot be prevented from flowing into the transmission buffer memory even if the quantization parameter is adjusted. This is because there is a problem in which time when coded data is actually transmitted becomes delay when the data quantity cannot be prevented from flowing into the transmission buffer memory.

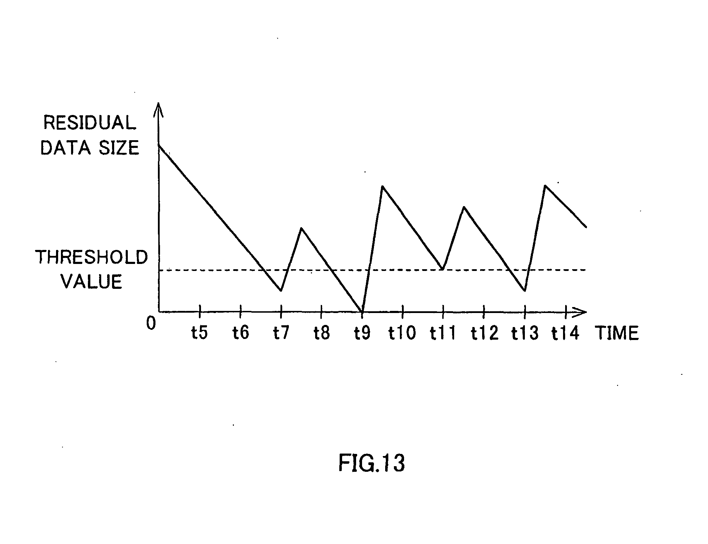

In this embodiment, the frame skip control section 1101 performs such control that skips coding at the coding sections 100-1 and 100-2 and executes no coding until a next coding time comes when monitoring the quantity of coded data left in the transmission buffer memory 102, so that the data quantity left in the transmission buffer memory 102 is larger than a fixed value (threshold value) (time t5, t6, t8, t10, t12, t14) as illustrated in FIG. 13.

Meanwhile, reading from the output terminal of the transmission buffer memory 102 is executed and when the data quantity left in the transmission buffer memory 102 falls below the threshold value, coding processing is executed at a next coding time.

Since the data quantity left in the transmission buffer memory 102 can be managed according to each of the first coding data and the second coding data, the frame skip can be controlled independently of the first coding section 100-1 and the second coding 100-2. Moreover, the residual data quantity of the transmission buffer memory 102 may be managed collectively to perform control of frame skip at the same time with the first coding and the second coding.

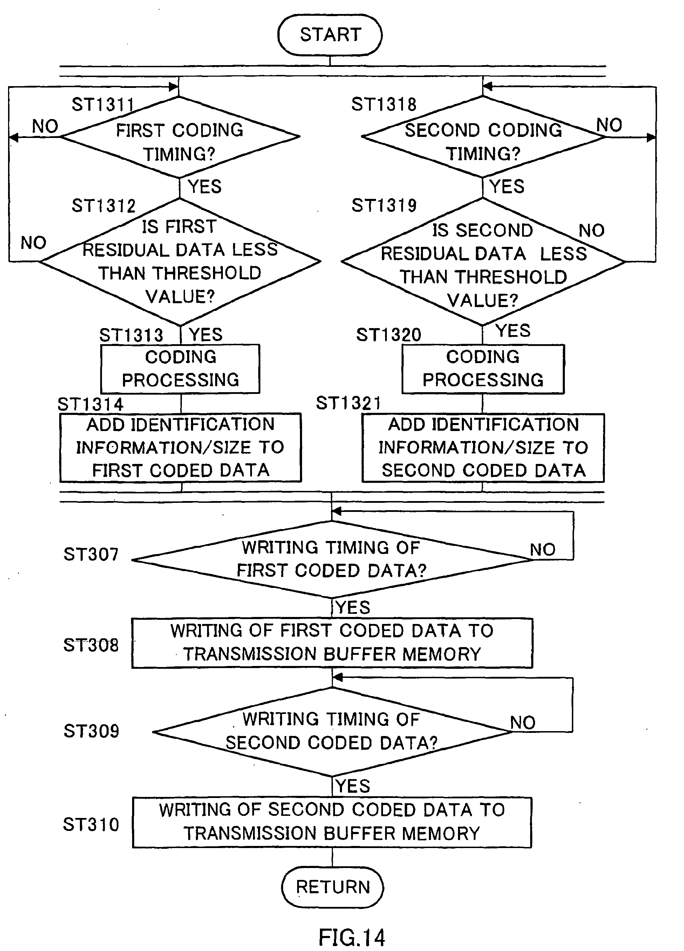

An explanation will next be given of an operation of the image transmitting apparatus having the aforementioned configuration with reference to the flowchart illustrated in FIG. 14.

The frame skip control section 1101 determines whether timing is the first coding timing (ST1311). Then, when it is the first coding timing, it is determined whether the residual data quantity of first coding left in the transmission buffer memory 102 is less than the threshold value (ST1312). When it is less than the threshold value, first coding processing is performed (ST1313) and identification information is added to the first coding data (ST1314).

Similarly, the frame skip control section 1101 determines whether timing is the second coding timing (ST1318). Then, when it is the second coding timing, it is determined whether the residual data quantity of second coding left in the transmission buffer memory 102 is less than the threshold value (ST1319). When it is less than the threshold value, second coding processing is performed (ST1320) and identification information is added to the second coding data (ST1321). The flow afterward is the same as ST307 to ST310 in FIG. 4 and the explanation will be omitted.

Since the data quantity left in the transmission buffer memory 102 can be managed according to each of the first coding data and the second coding data, the frame skip can be controlled independently of the first coding section 100-1 and the second coding 100-2. Moreover, the residual data quantity of the transmission buffer memory 102 may be managed collectively to perform control of frame skip at the same time with the first coding and the second coding.

Moreover, by the aforementioned configuration, in Embodiment 1, it is possible to reduce or eliminate an intermediate buffer, which is necessary to absorb time for waiting the storage processing in the pre-stage than the transmission memory 102. However, in this embodiment, since the quantity of codes output from the coding sections 100-1 and 100-2 can be surely adjusted, no intermediate buffer is needed even if image data input to the image transmitting apparatus according to this embodiment increases.

Furthermore, the fact that coded data stays in the transmission buffer memory 102 for a long time means that time between the instant when image data is input to the image transmitting apparatus of this embodiment and the instant when image data is actually transmitted increases and this will result in transmission delay. However, since the data quantity that stays in the transmission buffer memory 102 can be restrained by the aforementioned configuration, transmission delay can be suppressed.

Thus, according to this embodiment, when the quantity of coded data is too large, coding processing is skipped between the frames based on the quantity of coded data left in the transmission buffer memory to control the quantity coded data that stays in the transmission buffer to a certain size, thereby enabling to reduce transmission delay and transmit coded data stably.

The image transmitting apparatus according to the present invention is not limited to the case in which image data of two types of first CH and second CH is simultaneously coded and transmitted, and this can be easily applied to a case in which image data of three or more types is simultaneously coded and transmitted.

Moreover, the image transmitting apparatus according to the present invention may be implemented by software, and reading from a storage medium containing the software is executed to make it possible to implement the present invention.

Furthermore, the image transmitting apparatus according to the present invention may be installed on a communication terminal apparatus and a base station apparatus, thereby enabling to provide the communication terminal apparatus and base station apparatus both having the aforementioned function.

Still furthermore, the image transmitting apparatus according to the present invention may be used in a mobile communication system.

As explained above, according to the present invention, a different bit rate is allocated to coded data of the image data of multiple channels, enabling to perform transmission by one channel and improve transmission efficiency.

This application is based on the Japanese Patent Application No. 2002-052805 filed on February 28, 2002, entire content of which is expressly incorporated by reference herein.

### Industrial Applicability

The present invention can be applied to an image transmitting apparatus and image transmitting method.

## Claims

1. An image transmitting apparatus comprising:
coding means for coding image data of a plurality of channels;
adding means for adding identification information for identifying the plurality of channels to coded image data; and
a buffer that stores image data output from said adding means and outputs image data stored in the past with timing independent of timing of the storage.

2. The image transmitting apparatus according to claim 1, wherein said buffer includes an FIFO structure.

3. The image transmitting apparatus according to claim 1, wherein said buffer includes a ring buffer structure.

4. The image transmitting apparatus according to claim 1, wherein the identification information is information on the channels and information on a size of coded image data.

5. The image transmitting apparatus according to claim 1, wherein said coding means selectively codes image data of the plurality of channels in a time division manner.

6. The image transmitting apparatus according to claim 1, further comprising control means for controlling said coding means based on a data quantity of image data stored in said buffer to cause said coding means to generate a code quantity suitable for a transmission rate at which image data stored in said buffer is output.

7. The image transmitting apparatus according to claim 6, wherein said control means controls a quantization parameter of said coding means based on the data quantity of image data stored in said buffer.

8. The image transmitting apparatus according to claim 6, wherein said control means controls said coding means to execute frame skip of the image data based on the data quantity of image data stored in said buffer.

9. The image transmitting apparatus according to claim 8, wherein the frame skip is executed in frame unit.

10. A communication terminal apparatus having the image transmitting apparatus according to claim 1.

11. A base station apparatus having the image transmitting apparatus according to claim 1.

12. An image transmitting method comprising the steps of:
coding image data of a plurality of channels;
adding identification information for identifying the plurality of channels to coded image data; and
storing image data output from said adding step and outputs image data stored in the past with timing independent of timing of the storage.

13. An image transmitting program causing a computer to execute the steps of:
coding image data of a plurality of channels;
adding identification information for identifying the plurality of channels to coded image data; and
storing image data output from said adding step and outputs image data stored in the past with timing independent of timing of the storage.
